# EUROPEAN PATENT APPLICATION

(11) **EP 4 564 197 A1**
(43) Date of publication of application: **04.06.2025**
(21) Application number: 24209885.3
(22) Date of filing: 30.10.2024
(51) Int. Cl.: G06F 18/22, G06V 10/26, G06V 10/74, G06V 10/75, G06V 20/40, G06V 20/52, G06V 40/10

(54) **IMAGE PROCESSING APPARATUS**

(30) Priority: 01.12.2023 JP 2023203957
(71) Applicant: CANON KABUSHIKI KAISHA, Tokyo 146-8501 (JP)
(72) Inventor: KIMURA, Takato, Tokyo, 146-8501 (JP)
(74) Representative: Canon Europe Limited

(57) **Abstract**

An image processing apparatus includes a person detection unit for detecting an object representing a person from an image, and a fall determination unit for determining, based on similarity between a plurality of objects detected by the person detection unit and an image in each area of the plurality of objects, a fall state of a plurality of persons corresponding to the plurality of objects.

## Description

### BACKGROUND OF THE INVENTION

### Field of the Invention

The present invention relates to an image processing apparatus.

### Description of the Related Art

In recent years, a technique for detecting a fall state of a person from a video of a surveillance camera has been proposed and increasingly applied in fields such as customer security in stores and city surveillance. For example, there is a need to confirm whether a store is negligent in a case where a customer who fell and was injured sues the store and a need to detect and notify a store of a homeless person sitting or sleeping at an automatic teller machine (ATM) and the like.

There is a case where a person standing in front of a camera may appear to be lying on the floor due to his/her reflection on the floor surface. In such a case, the reflected image of the person on the floor surface may be erroneously detected. Japanese Patent Application Laid-Open No. 2021-147227 discusses a method for suppressing erroneous detection of a person's shadow based on a luminance value. However, a luminance value of a reflected image of a person on a floor surface is not largely different from that of an actual person, so that it is not possible to suppress erroneous detection due to the reflection of the person. A method for detecting a reflected area by a model using a deep neural network (DNN) is discussed by Jiaying Lin, Guodong Wang, Rynson W. H. Lau. "Progressive Mirror Detection." IEEE/CVF Conference on Computer Vision and Pattern Recognition (CVPR). 2020. However, the method discussed by Jiaying Lin et al. increases a calculation amount.

### SUMMARY OF THE INVENTION

The present invention is directed to suppressing erroneous detection of a reflected image of a person reflected on a floor surface or the like while suppressing an increase in a calculation amount in a case where a fallen state of the person in an image is detected.

According to an aspect of the present invention, there is provided an image processing apparatus as specified in claims 1 to 15.

Further features of the present invention will become apparent from the following description of embodiments with reference to the attached drawings.

### BRIEF DESCRIPTION OF THE DRAWINGS

Fig. 1 illustrates an example of a hardware configuration of an image processing apparatus.
Fig. 2 illustrates an example of a functional configuration of an image processing apparatus according to a first embodiment.
Fig. 3 is a flowchart illustrating processing executed by the image processing apparatus according to the first embodiment.
Fig. 4 illustrates an image example to be processed.
Fig. 5 illustrates human body detection results with respect to the image illustrated in Fig. 4.
Fig. 6 illustrates feature maps generated by a human body detection unit.
Fig. 7 illustrates clipped images from the image illustrated in Fig. 4.
Fig. 8 is a schematic block diagram illustrating a deep neural network (DNN) for fall determination.
Fig. 9 illustrates fall determination results.
Fig. 10 illustrates similarity between each object.
Fig. 11 illustrates an example of a functional configuration of an image processing apparatus according to a second embodiment.
Fig. 12 is a flowchart illustrating processing executed by the image processing apparatus according to the second embodiment.
Fig. 13 is a schematic diagram illustrating line-symmetric coordinates with a base of a human body rectangle as an axis.
Fig. 14 illustrates similarity between each object.
Fig. 15 illustrates an example of a functional configuration of an image processing apparatus according to a third embodiment.
Fig. 16 is a flowchart illustrating processing executed by the image processing apparatus according to the third embodiment.
Figs 17A and 17B are schematic diagrams illustrating joint point likelihood maps and joint point coordinates.
Fig. 18 is a schematic block diagram illustrating a DNN for fall determination.
Fig. 19 illustrates an example of a functional configuration of an image processing apparatus according to a fourth embodiment.
Fig. 20 is a flowchart illustrating processing executed by the image processing apparatus according to the fourth embodiment.
Fig. 21 illustrates an example of a functional configuration of an image processing apparatus according to a fifth embodiment.
Fig. 22 is a flowchart illustrating processing executed by the image processing apparatus according to the fifth embodiment.

### DESCRIPTION OF THE EMBODIMENTS

Embodiments according to the present invention will be described in detail below with reference to the attached drawings.

Configurations described according to the following embodiments are merely examples, and the present invention is not limited to the illustrated configurations.

An image processing apparatus according to a first embodiment detects a fall state of a person in an image. According to the present embodiment, the image processing apparatus carries out person detection using a deep neural network (hereinbelow, referred to as DNN) for human body detection (human body detection DNN) to determine a plurality of detection results. The image processing apparatus also determines a fall state of the person corresponding to the detection results by using a DNN for fall detection (fall detection DNN). The image processing apparatus then calculates a feature vector corresponding to each of the plurality of detection results by using an intermediate feature map of the human body detection DNN and an intermediate feature map of the fall detection DNN, and calculates similarity between the plurality of detection results. The image processing apparatus then removes a detection result that is highly likely to represent a reflected image of the person reflected on a floor surface from a detection target based on the similarity between the plurality of detection results. A procedure for this processing will be described below.

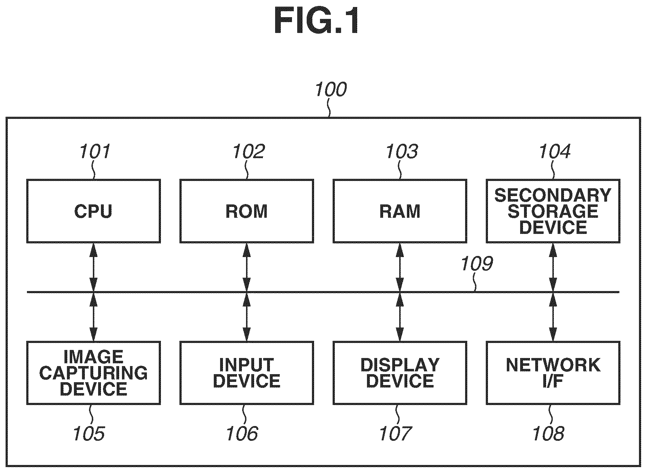

Fig. 1 illustrates an example of a hardware configuration of an image processing apparatus. An image processing apparatus 100 includes a central processing unit (CPU) 101, a read-only memory (ROM) 102, a random access memory (RAM) 103, a secondary storage device 104, an image capturing device 105, an input device 106, a display device 107, and a network interface (I/F) 108. These component units are connected to each other via a bus 109.

The CPU 101 executes various types of processing using a program and data stored in the ROM 102 or the secondary storage device 104. The CPU 101 controls the entire image processing apparatus 100.

The ROM 102 is a nonvolatile memory to store various programs and data.

The RAM 103 is a volatile memory to store temporary data, such as an image. The RAM 103 also stores a program and data loaded from the ROM 102 or the secondary storage device 104.

The secondary storage device 104 is a rewritable large-capacity storage device, such as a hard disk drive and a flash memory, to store various programs, image data, various setting data, and the like. The data stored in the secondary storage device 104 also includes a model parameter related to a trained deep learning model (the human body detection DNN and the fall determination DNN) to be used in the present embodiment. The program and data stored in the secondary storage device 104 are appropriately loaded to the RAM 103 under control of the CPU 101 and are processed by the CPU 101.

The image capturing device 105 is configured with an image capturing lens, an image capturing sensor such as a charge coupled device (CCD) sensor or a complementary metal oxide semiconductor (CMOS) sensor, a video signal processing unit, and the like to capture an image. The image capturing device 105 may be configured integrally with the image processing apparatus 100, or may be connected to the image processing apparatus 100 via the network I/F 108 or the like.

Examples of the input device 106 include a keyboard, a mouse, a touch panel, or the like and enables a user to perform input.

Examples of the display device 107 include a liquid crystal display. The display device 107 displays a processing result and the like to a user.

The network I/F 108 connects the image processing apparatus 100 to a network such as the Internet and an intranet.

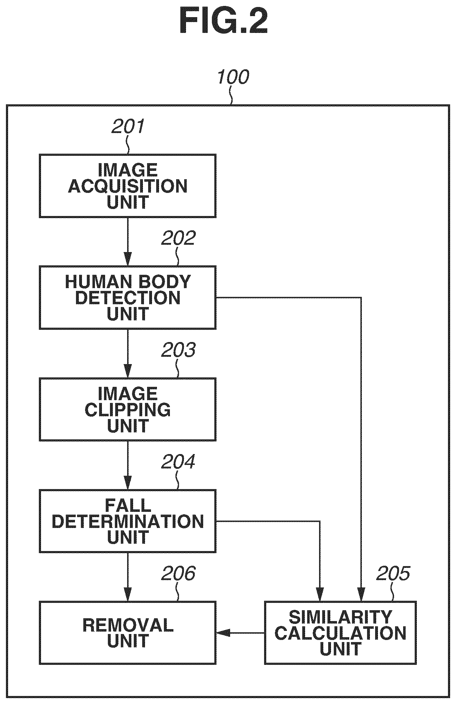

Fig. 2 illustrates an example of a functional configuration of the image processing apparatus 100 according to the present embodiment. The image processing apparatus 100 includes an image acquisition unit 201, a human body detection unit 202, an image clipping unit 203, a fall determination unit 204, a similarity calculation unit 205, and a removal unit 206. Each function illustrated in Fig. 2 is achieved by the CPU 101 reading out a program stored in the ROM 102 or the secondary storage device 104 to the RAM 103 and executing the program.

The image acquisition unit 201 acquires images sequentially from the image capturing device 105 at predetermined time intervals and provides the images to the human body detection unit 202. The function of the image acquisition unit 201 is not limited to an acquisition of a captured image from the image capturing device 105. For example, the image acquisition unit 201 may be input with an image streaming via the network or video data (recorded video) read from the secondary storage device 104.

The human body detection unit 202 detects an object identified as a person from the image acquired by the image acquisition unit 201. An object detection result includes information indicating the location of the object in the image, such as information of a circumscribed rectangle (hereinbelow, referred to as a human body rectangle) of the object and information of its likelihood (hereinbelow, referred to as human body likelihood). The human body detection unit 202 also generates a feature map corresponding to the object.

The image clipping unit 203 acquires, as a clipped image, an area corresponding to the human body rectangle detected by the human body detection unit 202 in the image acquired by the image acquisition unit 201.

The fall determination unit 204 generates score information (hereinbelow, referred to as a fall score) representing a fall state of the person corresponding to the object from the clipped image acquired by the image clipping unit 203. The fall determination unit 204 also generates a feature map corresponding to the object.

The similarity calculation unit 205 generates a feature vector corresponding to the object from the feature map generated by the human body detection unit 202 and the feature map generated by the fall determination unit 204. The similarity calculation unit 205 then calculates similarity between the objects.

The removal unit 206 removes an object that is highly likely to represent a reflected image of the person reflected on a floor surface from a detection target based on the similarity between the objects and the fall state of each object.

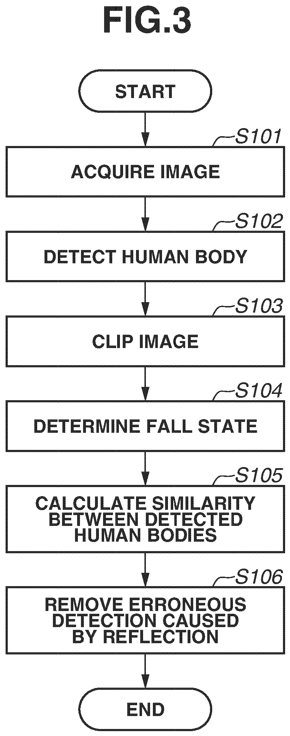

Fig. 3 is a flowchart illustrating processing executed by the image processing apparatus 100 according to the present embodiment. The CPU 101 reads out, from the ROM 102 or the secondary storage device 104, and execute software implementing the processing corresponding to each step in the flowchart.

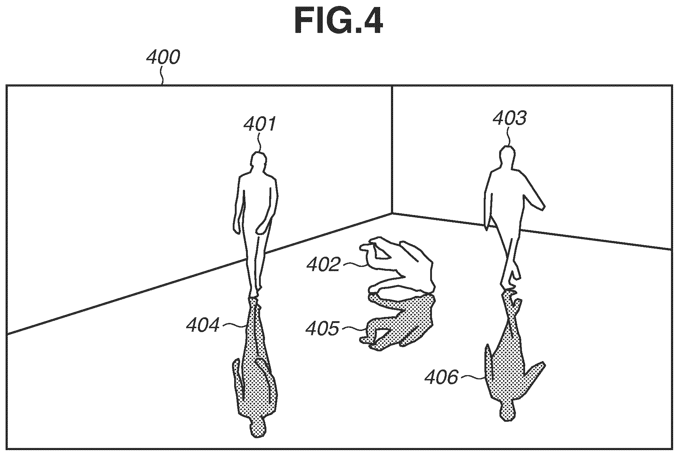

In step S101, the image acquisition unit 201 acquires an image from the image capturing device 105. An image 400 illustrated in Fig. 4 is an example of the acquired image. In the image 400, person images 401 to 403 corresponding to three persons and person images (reflected images) 404 to 406 generated by reflections of the respective persons on the floor surface are captured. The number of person images in the image is arbitrary and may be zero or three, and is not particularly limited.

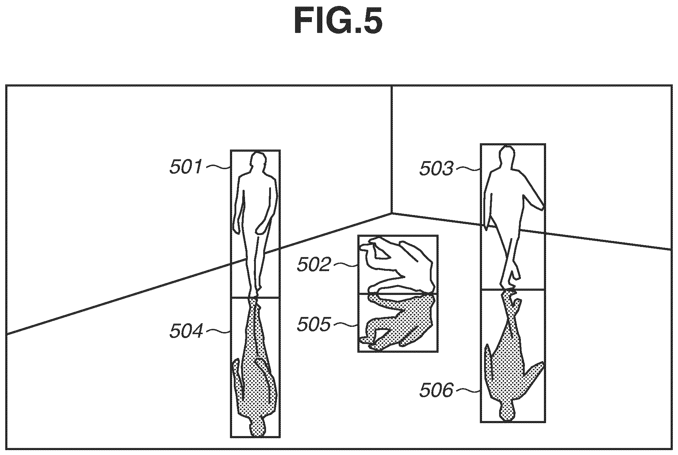

In step S102, the human body detection unit 202 applies the human body detection DNN to the image 400 acquired in step S101 to detect an object representing a person. As to the human body detection DNN, a detection DNN described in Ge, Zheng, et al. "YOLOX: Exceeding YOLO series in 2021." arXiv: 2107.08430. 2021, is used. Fig. 5 illustrates an object detection result with respect to the image 400. Objects 501 to 506 respectively correspond to the person images 401 to 406. As long as a method can detect an object representing a person, the method is not limited to that using the human body detection DNN. The human body detection unit 202 is an example of a person detection unit.

The objects 501 to 506 each include information of the human body rectangle and the human body likelihood. The human body rectangle includes a top-left x coordinate, a top-left y coordinate, a width, and a height of the rectangle. The human body likelihood is a value from 0 to 1. As the value is closer to 1, it is more likely that the human body exists in the human body rectangle.

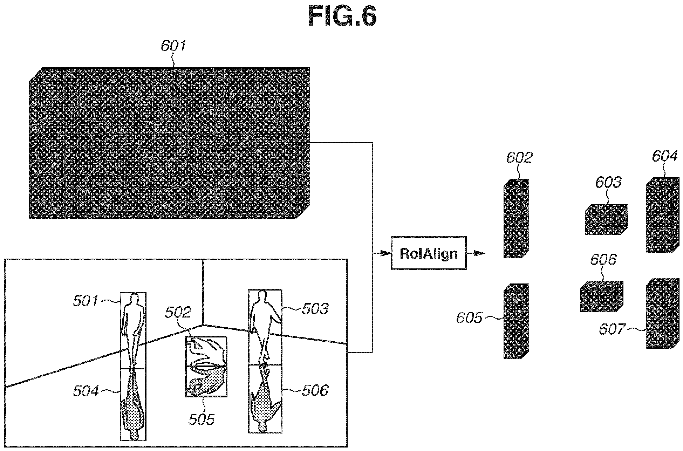

The human body detection unit 202 generates feature maps corresponding to each of the objects 501 to 506 using the feature map corresponding to the entire image acquired from the human body detection DNN and the objects 501 to 506. A method for generating a feature map corresponding to each object is now described with reference to Fig. 6.

The human body detection unit 202 performs region of interest align (RoIAlign) as described in He, Kaiming, et al. "Mask R-CNN." IEEE International Conference on Computer Vision (ICCV) 2017, using an intermediate feature map 601 corresponding to the entire image acquired from a fourth convolutional layer of the human body detection DNN and the objects 501 to 506. Specifically, the human body detection unit 202 samples a value of an area corresponding to each human body rectangle on an intermediate feature map using bilinear interpolation to generate intermediate feature maps 602 to 607 corresponding to each object. Sizes of the intermediate feature maps 602 to 607 are expressed by H_{Di} * W_{Di} * C_{D}. Here, i is an index of the corresponding person image, H_{Di} is a height of the intermediate feature map, W_{Di} is a width of the intermediate feature map, and C_{D} is the number of channels of the intermediate feature map. Here, C_{D} is equal to the number of output channels of the fourth convolutional layer of the human body detection DNN. A method for generating a feature map corresponding to each object representing a human body is not limited to the above-described method. The layer and the number of layers from which the intermediate feature map is acquired are arbitrary and are not particularly limited. In this way, the human body detection unit 202 acquires the feature maps corresponding to each of the objects 501 to 506.

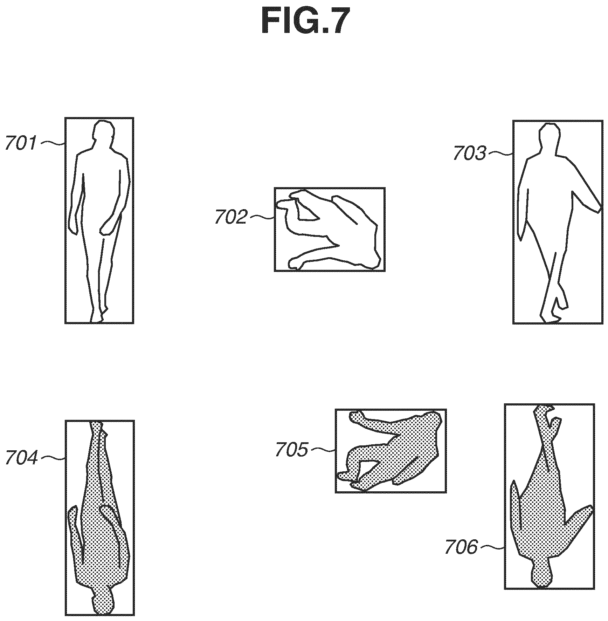

In step S103, the image clipping unit 203 generates a clipped image by clipping an area of the human body rectangle in the image 400 using the image 400 acquired in step S101 and the objects 501 to 506 acquired in step S102. Fig. 7 illustrates clipped images 701 to 706. The clipped images 701 to 706 respectively correspond to the person images 401 to 406.

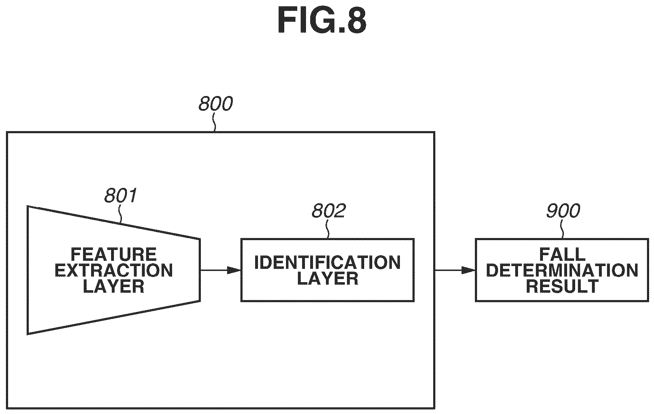

In step S104, the fall determination unit 204 applies the fall determination DNN to the clipped images 701 to 706 generated in step S103 to perform fall determination on each object. Fig. 8 schematically illustrates a fall determination DNN 800 to be used in the present embodiment. The fall determination DNN 800 includes a feature extraction layer 801 and an identification layer 802. The clipped images 701 to 706 are input to the fall determination DNN 800, so that a fall determination result 900 and the intermediate feature map are output. As long as a method can determine a fall state of a person corresponding to an object, the method is not limited to that using the fall determination DNN. The fall determination unit 204 is an example of a fall determination unit.

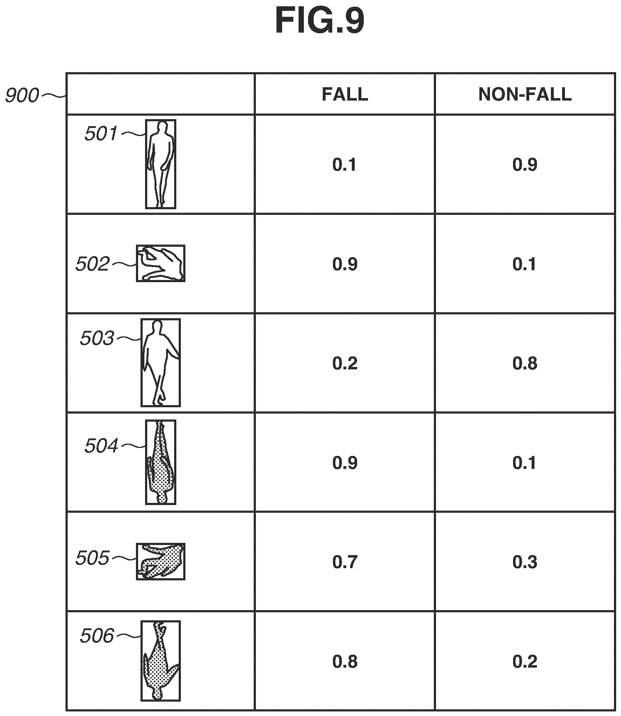

Fig. 9 illustrates an example of the fall determination result 900. The fall determination result 900 includes score information (fall score) in which a corresponding value increases as the person is more likely to be in a state corresponding to a classification of the fall state such as "fall" or "non-fall". The fall determination result 900 is a set of data of the objects 501 to 506 and fall scores of the objects 501 to 506. The intermediate feature map is acquired from a last convolutional layer in the feature extraction layer 801 of the fall determination DNN 800. The size of the intermediate feature map is expressed by H_{Ci} * W_{Ci} * Cc. Here, i is an index of the corresponding person image, H_{Ci} is a height of the intermediate feature map, W_{Ci} is a width of the intermediate feature map, and Cc is the number of channels of the intermediate feature map. Here, Cc is equal to the number of output channels of the last convolutional layer in the feature extraction layer 801. As long as the intermediate feature map is acquired in a process of outputting a fall determination result, the layer and the number of layers from which the intermediate feature map is acquired are arbitrary and are not particularly limited. In this way, the fall determination unit 204 acquires the feature maps corresponding to each of the objects 501 to 506 by inputting the clipped images 701 to 706 of the objects 501 to 506 to the fall determination DNN.

In step S105, the similarity calculation unit 205 calculates the similarity between the objects using the intermediate feature maps 602 to 607 acquired by the human body detection unit 202 and the intermediate feature map acquired by the fall determination unit 204. The similarity calculation unit 205 is an example of a similarity calculation unit.

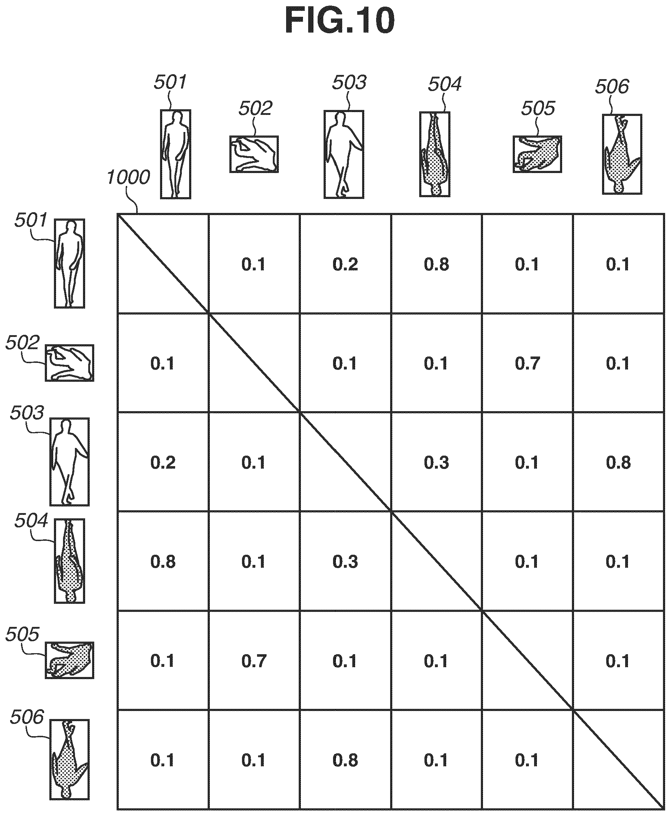

Fig. 10 illustrates an example of similarity 1000 between each object. The similarity 1000 between each object is similarity corresponding to each combination of the objects 501 to 506. First, the similarity calculation unit 205 generates an intermediate feature vector by averaging and connecting, in a spatial direction, the intermediate feature maps 602 to 607 acquired by the human body detection unit 202 and the intermediate feature map acquired by the fall determination unit 204, which correspond to each object. The intermediate feature vector generated here is a vector of C_{D} + Cc dimensions. A method for generating the intermediate feature vector is not limited to the above-described method. The intermediate feature vector may be generated by connecting the intermediate feature maps using basic statistics amounts such as maximum, minimum, and median values in the spatial direction of the intermediate feature maps. In a case where the number of channels C_{D} and Cc are equal, a sum or a difference of the intermediate feature maps may be used instead of connecting the intermediate feature maps. In this case, the intermediate feature vector is a vector of C_{D} or Cc dimension. Any method may be used as long as the method uses the intermediate feature maps acquired respectively by the human body detection unit 202 and the fall determination unit 204 corresponding to each object to generate the intermediate feature vectors so that the number of dimensions is equal. Further, the similarity calculation unit 205 may generate the intermediate feature vector using only either one of the intermediate feature map acquired by the human body detection unit 202 and the intermediate feature map acquired by the fall determination unit 204.

Next, the similarity calculation unit 205 calculates cosine similarity between the intermediate feature vectors as the similarity between the objects. A correlation coefficient between the intermediate feature vectors may be calculated as the similarity between the objects. A method is not particularly limited as long as the method can calculate similarity between objects using an intermediate feature vector.

In step S106, the removal unit 206 removes an object that satisfies a condition of being the reflected image of the person from the detection target using the fall determination result 900 acquired by the fall determination unit 204 and the similarity 1000 between each object acquired by the similarity calculation unit 205. According to the present embodiment, the removal unit 206 determines whether following two conditions are satisfied for each object and removes the object if it is determined to satisfy either one of the two conditions. The removal unit 206 is an example of a removal unit. Then, a series of processing in the present flowchart is terminated.

### <First Condition>

There is an object of which fall score is greater than or equal to a first threshold value and of which similarity is greater than or equal to a second threshold value. Further, the object is located below a position of an object of which fall score of a person (similar person) corresponding to an object of which similarity is greater than or equal to the second threshold value is less than the first threshold value and of which a position in the image corresponds to the similar person.

### <Second Condition>

There is an object of which fall score is greater than or equal to the first threshold value and of which similarity is greater than or equal to the second threshold value. The object is located below a position of an object of which fall score of a person (similar person) corresponding to an object of which similarity is greater than or equal to the second threshold value is greater than or equal to the first threshold value and of which a position in the image corresponds to the similar person.

Here, the objects 504 and 506 satisfy the first condition, and the object 505 satisfies the second condition, so that the removal unit 206 removes the objects 504 to 506. The first and second conditions are examples of conditions for a reflected image of a person. A threshold value of the fall score (first threshold value) and a threshold value of the similarity (second threshold value) are 0.6 and 0.5, respectively, but may be set to arbitrary values, such as 0.3 and 0.7.

In the above-described first and second conditions, in order to remove a reflected image caused by a reflection on the floor surface, a condition that a position of a first object in an image is lower than a position of a second object of which similarity to the first object is greater than or equal to the second threshold value is added. On the other hand, in a case where a person falls near a glass or a mirror in a room or a wall surface such as a shop window in town, the reflected image on the wall surface may also appear to be falling. Thus, another condition regarding a positional relationship between the first object and the second object may be used in consideration of a positional relationship with another object, such as the floor surface or the wall surface, that is likely to reflect light in the image, an illumination condition, and orientation or settings of the image capturing device 105.

According to the above-described embodiment, the fall state is determined (in step S104), and then the similarity between the objects is calculated (in step S105). However, the similarity between the objects may be calculated, and then the fall state may be determined. In this case, the similarity calculation unit 205 calculates the similarity between the objects using, for example, the intermediate feature map acquired by the human body detection unit 202. The fall determination unit 204 performs fall determination on each of the objects 501 to 506 based on the clipped images 701 to 706 of the objects 501 to 506. In this case, if there is the second object of which similarity to the first object is greater than or equal to the second threshold value, the fall determination unit 204 may not perform fall determination on the first object or the second object. Specifically, the fall determination unit 204 determines whether to perform fall determination based on the images in the areas of the respective first and second objects. For example, if the position of the first object in the image is lower than the position of the second object, the fall determination unit 204 performs fall determination on the second object, but does not perform fall determination on the first object. Accordingly, it is possible to exclude an object that is highly likely to be a reflected image of a person from a target of fall determination.

In a combination of objects of which similarity is greater than or equal to the second threshold value, if one of the objects indicates a fall state and the other indicates a non-fall state, the removal unit 206 may remove the former.

According to the present embodiment, in a case where a fall state of a person in an image is to be detected, it is possible to suppress erroneous detection of a reflected image of the person reflected on a floor surface or the like while suppressing an increase in a calculation amount.

According to a second embodiment, a pair that is highly likely to be a combination of an object representing an actual person and an object of a reflection of the person on the floor surface is selected, and similarity is calculated only between the objects of the selected pair. A procedure for this processing will be described below. Descriptions of portions similar to those according to the first embodiment are omitted, and differences will mainly be described.

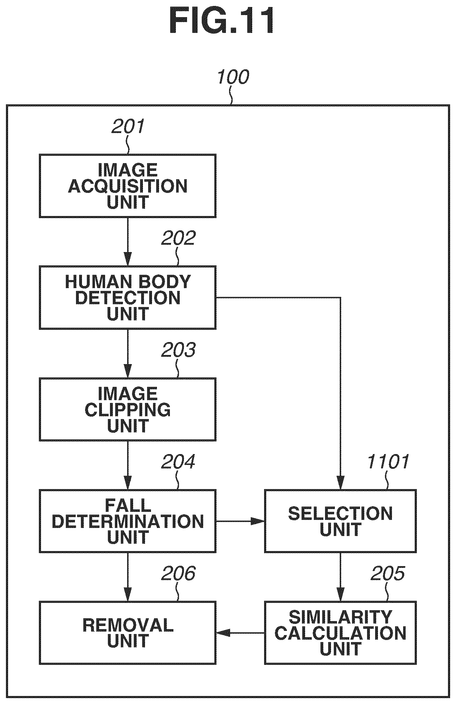

Fig. 11 illustrates an example of a functional configuration of the image processing apparatus 100 according to the present embodiment. The image processing apparatus 100 according to the present embodiment is different from the image processing apparatus 100 illustrated in Fig. 2 in that the image processing apparatus 100 according to the present embodiment includes a selection unit 1101.

The selection unit 1101 selects, for each object, an object that is highly likely to be a reflected image of a person corresponding to the object reflected on the floor surface.

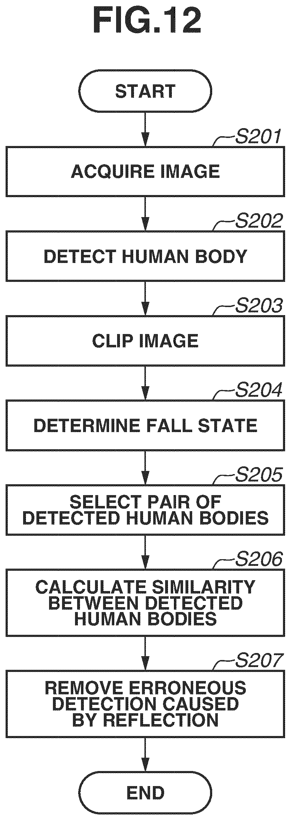

Fig. 12 is a flowchart illustrating processing executed by the image processing apparatus 100 according to the present embodiment.

First, the image processing apparatus 100 executes processing illustrated in steps S201 to S204. The processing illustrated in steps S201 to S204 is similar to that in steps S101 to S104 in Fig. 3.

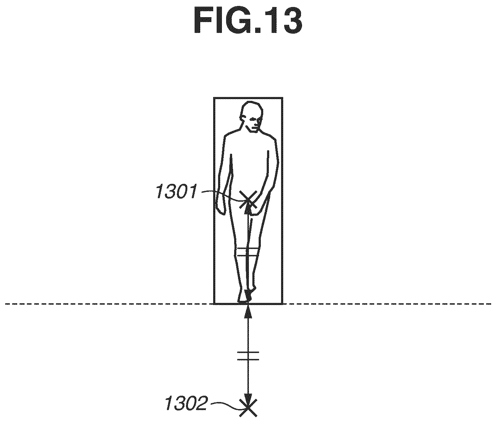

In step S205, the selection unit 1101 selects, as a pair, a target object and an object that is highly likely to be a reflected image of the person corresponding to the target object reflected on the floor surface. First, as illustrated in Fig. 13, the selection unit 1101 calculates coordinates 1302 that are line-symmetric with a base of the human body rectangle as an axis with respect to center coordinates 1301 of each human body rectangle acquired by the human body detection unit 202. Next, the selection unit 1101 selects, as a pair, objects that have center coordinates at positions close to the coordinates 1302. Specifically, the selection unit 1101 calculates a Euclidean distance between the center coordinates of the other human body rectangle and the coordinates 1302 and selects, as a pair, the objects of which the Euclidean distance is less than or equal to a predetermined threshold value. Here, the object 504 is selected as a pair for the object 501, the object 505 is selected as a pair for the object 502, and the object 506 is selected as a pair for the object 503. The method is not limited to the above-described method as long as the method can select a target object and an object that is highly likely to be a reflected image of a person corresponding to the target object reflected on the floor surface or the like as a pair based on a positional relationship with respect to the target object. The selection unit 1101 is an example of a selection unit.

In step S206, the similarity calculation unit 205 calculates similarity between the objects selected as the pair in step S205 using the intermediate feature maps 602 to 607 acquired by the human body detection unit 202 and the intermediate feature map acquired by the fall determination unit 204. According to the first embodiment, the similarity is calculated for all combinations of objects. However, according to the present embodiment, the similarity is calculated only between the objects selected as the pair by the selection unit 1101.

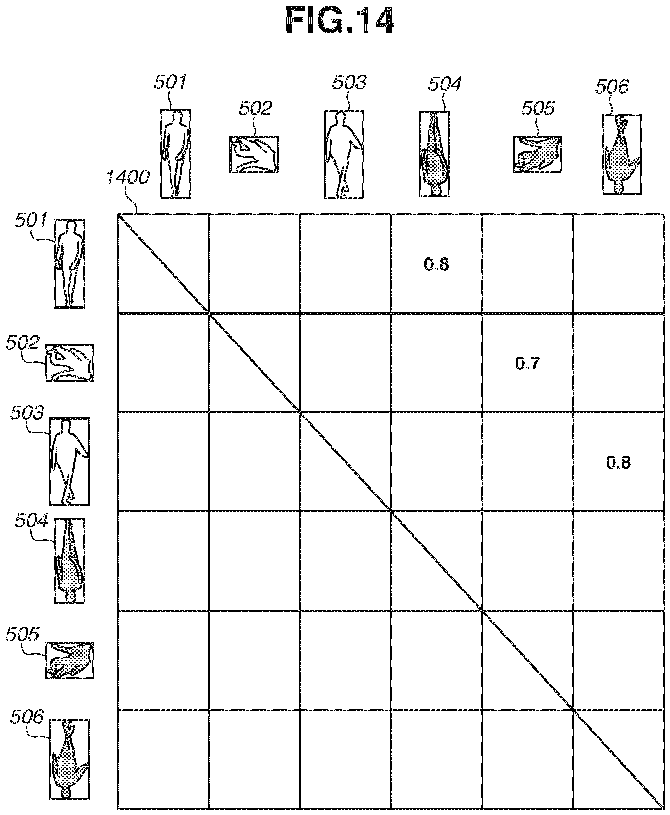

Fig. 14 illustrates an example of similarity 1400 between each object. According to the present embodiment, the similarity calculation unit 205 calculates the similarity only for the combinations of the objects 501 and 504, the objects 502 and 505, and the objects 503 and 506.

Processing executed next in step S207 is similar to that in step S106, so that the description thereof is omitted. Thereafter, a series of processing in the present flowchart is terminated.

According to the present embodiment, the number of pairs in which similarity is calculated is limited, so that an increase in a calculation amount can be suppressed.

According to a third embodiment, a joint point of a person is detected using a joint point detection DNN, and similarity between objects is calculated based on the detection result of the joint point. A procedure for this processing will be described below. Descriptions of portions similar to those according to the second embodiment are omitted, and differences will mainly be described.

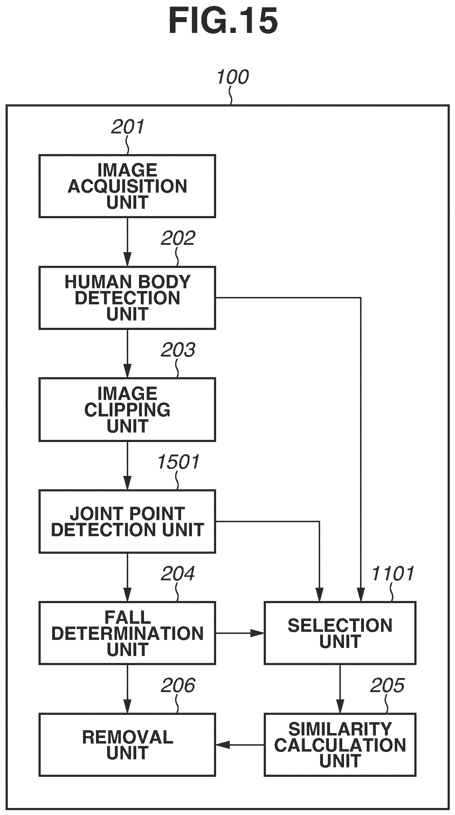

Fig. 15 illustrates an example of a functional configuration of the image processing apparatus 100 according to the present embodiment. The image processing apparatus 100 according to the present embodiment is different from the image processing apparatus 100 illustrated in Fig. 11 in that the image processing apparatus 100 according to the present embodiment includes a joint point detection unit 1501.

The joint point detection unit 1501 detects a joint point of an object from a clipped image acquired by the image clipping unit 203.

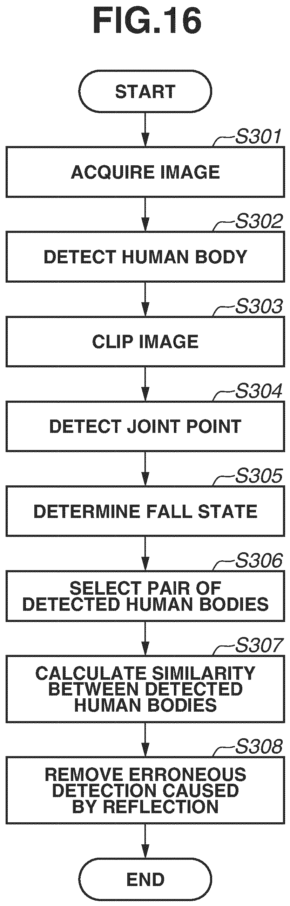

Fig. 16 is a flowchart illustrating processing executed by the image processing apparatus 100 according to the present embodiment.

First, the image processing apparatus 100 executes processing illustrated in steps S301 to S303. The processing illustrated in steps S301 to S303 is similar to that in steps S201 to S203 in Fig. 12.

In step S304, the joint point detection unit 1501 applies the joint point detection DNN to the clipped images 701 to 706 generated in step S303 to detect a joint point in each object. As the joint point detection DNN, a detection DNN described in Xu, Yufei, et al. "ViTPose: Simple Vision Transformer Baselines for Human Pose Estimation." Advances in Neural Information Processing Systems 35 (NeurIPS). 2022, is used. The clipped images 701 to 706 are input to the joint point detection DNN, so that a joint point likelihood map and an intermediate feature map are output. The joint point likelihood map is a heat map of position information of the joint point. The joint points according to the present embodiment includes 17 points: a nose, eyes, ears, shoulders, elbows, hips, knees, and ankles. The joint point detection unit 1501 is an example of a joint point detection unit.

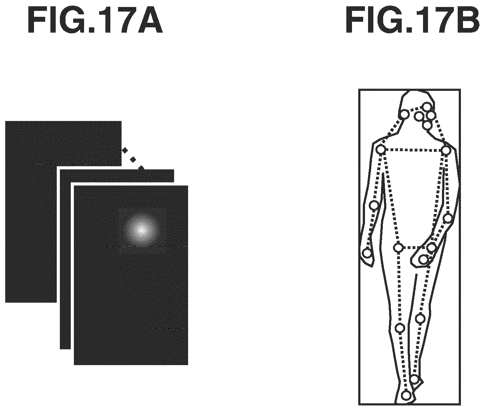

Fig. 17A schematically illustrates joint point likelihood maps corresponding to the clipped image 701 as an example of a joint point likelihood map. The joint point likelihood map is information of 17 heat maps corresponding to each of the 17 joint points, and a position where the joint point is more likely to exist has a higher value. The joint point detection unit 1501 acquires a peak position from the joint point likelihood map to calculate joint point coordinates for each joint point. Fig. 17B schematically illustrates the joint point coordinates corresponding to the clipped image 701 as an example of joint point coordinates. In Fig. 17B, 17 joint point coordinates are illustrated for the human body in the clipped image 701.

The intermediate feature map is acquired from a fifth convolutional layer of the joint point detection DNN. The size of the intermediate feature map is expressed by H_{Pi} * W_{Pi} * C_{P}. Here, i is an index of the corresponding person image, H_{Pi} is a height of the intermediate feature map, W_{Pi} is a width of the intermediate feature map, and C_{P} is the number of channels of the intermediate feature map. Here, C_{P} is equal to the number of output channels of the fifth convolutional layer of the joint point detection DNN. As long as the intermediate feature map is acquired in a process of outputting the joint point likelihood map, the layer and the number of layers from which the intermediate feature map is acquired are arbitrary and are not particularly limited. In this way, the joint point detection unit 1501 inputs the clipped images 701 to 706 of the objects 501 to 506 to the joint point detection DNN and acquires the feature maps corresponding to each of the objects 501 to 506.

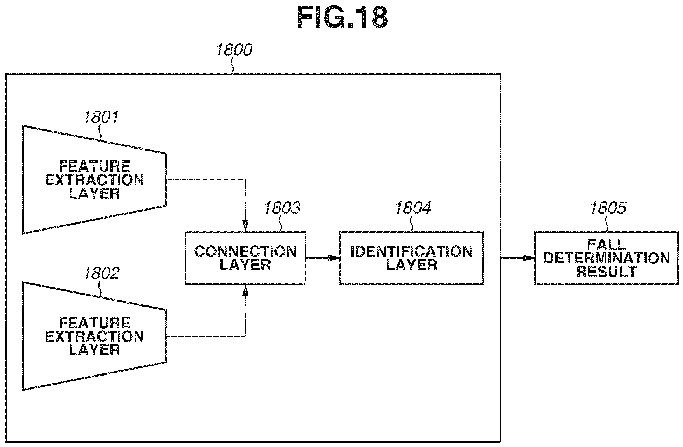

In step S305, the fall determination unit 204 applies the fall determination DNN to the clipped images 701 to 706 generated in step S303 and the joint point likelihood maps acquired in step S304 to perform fall determination on each object. Fig. 18 schematically illustrates a fall determination DNN 1800 to be used according to the present embodiment. The fall determination DNN 1800 includes feature extraction layers 1801 and 1802, a connection layer 1803, and an identification layer 1804. The clipped images 701 to 706 and the joint point likelihood maps are input to the fall determination DNN 1800, so that a fall determination result 1805 and the intermediate feature map are output. The feature extraction layers 1801 and 1802 each acquire the clipped image and the joint point likelihood map as input. The feature extraction layers 1801 and 1802 are set to have a structure of a numerical vector having an output size of M * N dimensions to be input to the connection layer 1803 in a state where spatial information is matched. The identification layer 1804 has a structure that outputs the fall determination result 1805 based on a feature amount connected in the connection layer 1803.

Processing executed next in step S306 is similar to that in step S205, and thus the description thereof is omitted.

In step S307, the similarity calculation unit 205 calculates similarity between the objects selected as the pair in step S306. Here, in addition to the intermediate feature maps 602 to 607 acquired by the human body detection unit 202 and the intermediate feature map acquired by the fall determination unit 204, the joint point likelihood map and the joint point coordinates acquired by the joint point detection unit 1501 are used. According to the present embodiment, the similarity is calculated only between the objects selected as the pair by the selection unit 1101 similarly to the second embodiment.

First, the similarity calculation unit 205 averages and connects, in the spatial direction, the intermediate feature map acquired by the human body detection unit 202, the intermediate feature map acquired by the joint point detection unit 1501, and the intermediate feature map acquired by the fall determination unit 204, which correspond to each object. Accordingly, an intermediate feature vector is generated. The intermediate feature vector generated here is a vector of C_{D} + C_{P} + Cc dimensions. The intermediate feature maps may be connected using basic statistics such as maximum, minimum, and median values in the spatial direction. In a case where the number of channels C_{D}, C_{P}, and Cc are equal, a sum or a difference of the intermediate feature maps may be used instead of connecting the intermediate feature maps. In this case, the intermediate feature vector is a vector of C_{D}, C_{P}, or Cc dimension. Any method may be used as long as it uses the intermediate feature maps acquired respectively by the human body detection unit 202, the joint point detection unit 1501, and the fall determination unit 204 corresponding to each of the objects to generate the intermediate feature vectors so that the number of dimensions is equal. The similarity calculation unit 205 may generate the intermediate feature vector using only at least one of the intermediate feature map acquired by the human body detection unit 202, the intermediate feature map acquired by the joint point detection unit 1501, and the intermediate feature map acquired by the fall determination unit 204.

Next, the similarity calculation unit 205 calculates cosine similarity between the intermediate feature vectors of the selected pair of objects. The similarity calculation unit 205 inverts the joint point likelihood map of one in the selected pair of objects in a vertical direction and calculates an average of absolute values of differences from the joint point likelihood map of the other object. The similarity calculation unit 205 thereby calculates the similarity between these joint point likelihood maps based on the average of absolute values of differences. As the average of the absolute values of the differences from the inverted joint point likelihood map is smaller, the similarity increases. The similarity may be calculated based on an average of squares of differences between the joint point likelihood maps, and any method may be used as long as it can calculate similarity between joint point likelihood maps.

The similarity calculation unit 205 may also invert a y coordinate of the joint point coordinates of one in the selected pair of objects in the vertical direction and calculate an average of absolute values of differences from the joint point coordinates of the other object to calculate the similarity between the joint point coordinates. As the average of the absolute values of the difference from the inverted joint position is smaller, the similarity is increased. The similarity may be calculated based on an average of squares of differences between the joint point coordinates, and any method may be used as long as it can calculate similarity between joint point coordinates.

Lastly, the similarity calculation unit 205 calculates an average of the cosine similarity between the intermediate feature vectors, the similarity between the joint point likelihood maps, and the similarity between the joint point coordinates, as the similarity between the objects. The maximum of the similarity may be calculated as the similarity between the objects. A method is not particularly limited as long as it can calculate similarity between objects.

Processing executed next in step S308 is similar to that in step S106, so that the description thereof is omitted. Then, a series of processing in the present flowchart is terminated.

According to the present embodiment, it is possible to suppress erroneous detection of a reflected image of a person reflected on a floor surface or the like using a detection result of joint points of the person.

According to a fourth embodiment, a human body ratio, which represents a ratio of a size of each region in a human body, is calculated from joint points of a person, and similarity between objects is calculated based on the human body ratio. A procedure for this processing will be described below. Descriptions of portions similar to those according to the third embodiment are omitted, and differences will mainly be described.

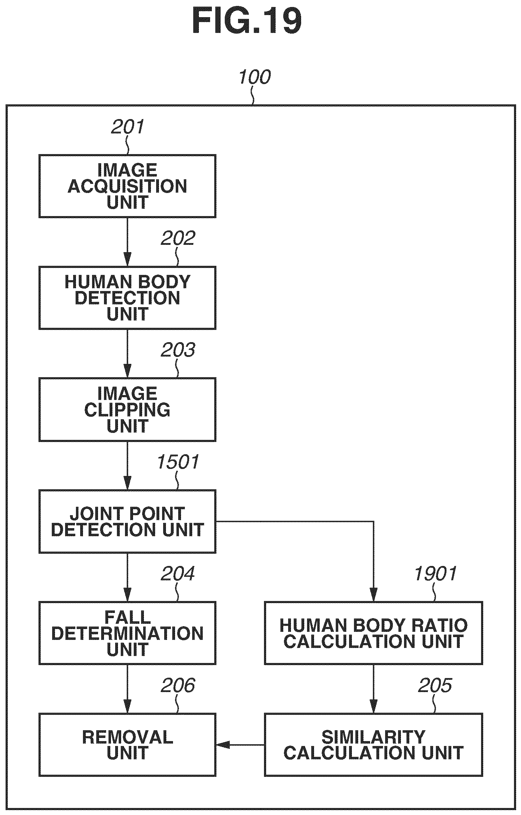

Fig. 19 illustrates an example of a functional configuration of the image processing apparatus 100 according to the present embodiment. The image processing apparatus 100 according to the present embodiment is different from the image processing apparatus 100 illustrated in Fig. 15 in that the image processing apparatus 100 according to the present embodiment includes a human body ratio calculation unit 1901 instead of the selection unit 1101.

The human body ratio calculation unit 1901 calculates a human body ratio, which represents a ratio of a size of each region in a human body, from the joint point coordinates acquired by the joint point detection unit 1501.

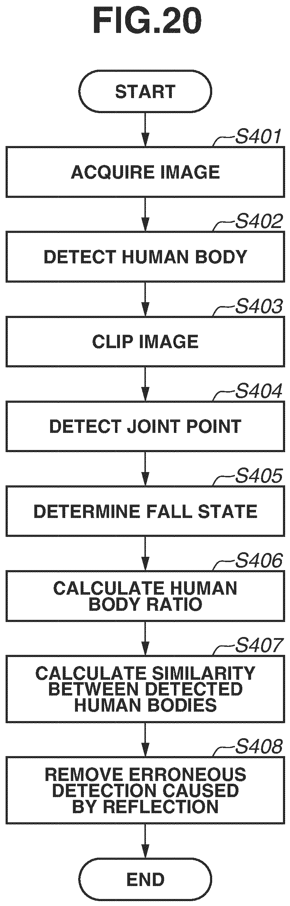

Fig. 20 is a flowchart illustrating processing executed by the image processing apparatus 100 according to the present embodiment.

First, the image processing apparatus 100 executes processing illustrated in steps S401 to S405. The processing illustrated in steps S401 to S405 is similar to that in steps S301 to S305 in Fig. 16.

In step S406, the human body ratio calculation unit 1901 calculates a human body ratio of each object using the joint point coordinates acquired by the joint point detection unit 1501. Specifically, the human body ratio calculation unit 1901 calculates an area of a smallest circumscribed rectangle that includes all of the joint point positions of the nose, eyes, and ears as a head size and calculates an area of the human body rectangle as a whole body size. The human body ratio calculation unit 1901 then outputs a ratio of the head size to the whole body size as the human body ratio. A ratio of a width between shoulders to a width between hips may be calculated as the human body ratio, or a plurality of ratios may be calculated. Any method may be used as long as the method can calculate a ratio of lengths between each region of a human body or a ratio of a region to a total body length. The human body ratio calculation unit 1901 is an example of a human body ratio calculation unit.

In step S407, the similarity calculation unit 205 calculates the similarity between the objects using the human body ratio of each object acquired in step S406. Specifically, as an absolute value of a difference in the human body ratios between the objects is smaller, the similarity between the objects increases. A method is not particularly limited as long as the method can calculate similarity between objects using a human body ratio. In a case where the human body ratio includes a plurality of ratios, cosine similarity may be used. According to the present embodiment, the selection unit 1101 is not included, so that the similarity is calculated using the human body ratio for all combinations of the objects. As in the third embodiment, the similarity may be calculated only between objects that are selected as a pair by the selection unit 1101.

Processing executed next in step S408 is similar to that in step S106, so that the description thereof is omitted. Then, a series of processing in the present flowchart is terminated.

According to the present embodiment, it is possible to improve accuracy of calculating similarity between objects representing a person by using a human body ratio of the person.

According to a fifth embodiment, a three-dimensional model of a person is estimated to generate a prediction image that reproduces a reflected image of the person on a floor surface in a pseudo manner, and similarity between objects is calculated based on a comparison result between an actual image and the prediction image. A procedure for this processing will be described below. Descriptions of portions similar to those according to the first embodiment are omitted, and differences will mainly be described.

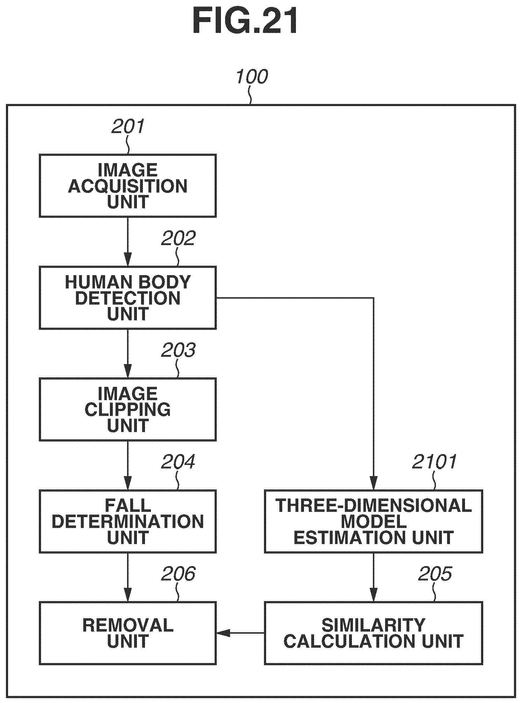

Fig. 21 illustrates an example of a functional configuration of the image processing apparatus 100 according to the present embodiment. The image processing apparatus 100 according to the present embodiment is different from the image processing apparatus 100 illustrated in Fig. 2 in that the image processing apparatus 100 according to the present embodiment includes a three-dimensional model estimation unit 2101.

The three-dimensional model estimation unit 2101 estimates a three-dimensional model of a person and generates a prediction image that reproduces a reflected image of the person on the floor surface in a pseudo manner (hereinbelow, referred to as pseudo-reflected image) using the estimated three-dimensional model.

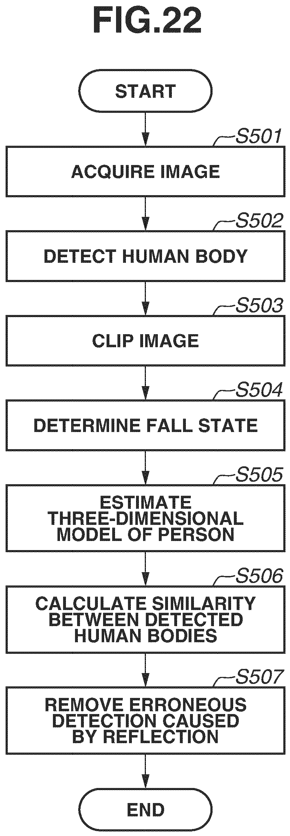

Fig. 22 is a flowchart illustrating processing executed by the image processing apparatus 100 according to the present embodiment.

First, the image processing apparatus 100 executes processing illustrated in steps S501 to S504. The processing illustrated in steps S501 to S504 is similar to that in steps S101 to S104 in Fig. 3.

In step S505, the three-dimensional model estimation unit 2101 generates pseudo-reflected images by performing three-dimensional model estimation on the clipped images 701 to 706 generated in step S503.

Accordingly, the pseudo-reflected images are generated for each of the clipped images 701 to 706 generated in step S503. A method described in Saito, Shunsuke, et al. "PIFu: Pixel-Aligned Implicit Function for High-Resolution Clothed Human Digitization." the IEEE International Conference on Computer Vision (ICCV). 2019, is used for three-dimensional model estimation.

A three-dimensional model is formed from polygon data. The three-dimensional model estimation unit 2101 generates a pseudo-reflected image by inverting and rendering the y coordinate of each vertex of the polygon data.

A method for generating a pseudo-reflected image is not limited to the above-described method, and any method can be used as long as the method can generate a pseudo-reflected image from a clipped image.

In step S506, the similarity calculation unit 205 calculates similarity between the clipped images 701 to 706 generated in step S503 and the pseudo-reflected images acquired in step S505. The similarity here is calculated for each combination of the objects 501 to 506 and the pseudo-reflected images corresponding to the objects 501 to 506. Examples of a method for calculating similarity include a method for calculating cosine similarity of histograms of pixel values between the clipped image and the pseudo-reflected image. Any method may be used as long as the method can calculate similarity between images.

Processing executed in step S507 is similar to that in step S106, so that the description thereof is omitted. Then, a series of processing in the present flowchart is terminated.

According to the present embodiment, it is possible to improve accuracy of calculating similarity between objects representing a person by using a reflected image that is reproduced in a pseudo manner by estimating a three-dimensional model of the person.

The embodiments are described in detail above, but the present invention can be realized by, for example, a system, an apparatus, a method, a program, or a recording medium (a storage medium). Specifically, the present invention can be applied to a system configured with a plurality of devices (e.g., a host computer, an interface device, an image capturing device, and a web application) or an apparatus configured with a single device.

The present invention can also be realized by executing the following processing. A program for realizing one or more functions of the above-described embodiments is supplied to a system or an apparatus via a network or a storage medium and one or more processors in a computer of the system or the apparatus reads and executes the program. The present invention can also be realized by a circuit (e.g., an application specific integrated circuit (ASIC)) that realizes one or more functions.

The descriptions of each of the above-described embodiments include following configurations, a method, and a program.

### (Configuration 1)

An image processing apparatus includes a person detection unit configured to detect an object representing a person from an image, and a fall determination unit configured to determine, based on similarity between a plurality of objects detected by the person detection unit and an image in each area of the plurality of objects, a fall state of a plurality of persons corresponding to the plurality of objects.

### (Configuration 2)

In the image processing apparatus according to the configuration 1, in a case where there is a second object of which similarity to a first object is greater than or equal to a threshold value, the fall determination unit does not determine a fall state of the first object or the second object.

### (Configuration 3)

In the image processing apparatus according to the configuration 1, in a case where there is a second object of which similarity to a first object is greater than or equal to a threshold value, based on a positional relationship between the first object and the second object, the fall determination unit does not determine a fall state of the first object or the second object.

### (Configuration 4)

The image processing apparatus according to any one of the configurations 1 to 3 further includes a removal unit configured to remove, in a case where a first object of which a fall state is determined by the fall determination unit satisfies a predetermined condition, the first object from a detection target.

### (Configuration 5)

In the image processing apparatus according to the configuration 4, the predetermined condition is a condition regarding a fall state of the first object and a second object of which similarity to the first object is greater than or equal to a threshold value.

### (Configuration 6)

In the image processing apparatus according to the configuration 4 or 5, the predetermined condition is a condition regarding a positional relationship between the first object and a second object of which similarity to the first object is greater than or equal to a threshold value.

### (Configuration 7)

In the image processing apparatus according to any one of the configurations 1 to 6, the person detection unit detects an object using a first learning model and acquires a feature map of the object from the first learning model, and the image processing apparatus further includes a similarity calculation unit configured to calculate similarity between the plurality of objects using the feature map acquired by the person detection unit.

### (Configuration 8)

The image processing apparatus according to any one of the configurations 1 to 7 further includes an acquisition unit configured to input the image of each area of the plurality of objects to a second learning model for determining a fall state of a person to acquire a feature map corresponding to each of the plurality of objects, and a similarity calculation unit configured to calculate similarity between the plurality of objects using the feature map acquired by the acquisition unit.

### (Configuration 9)

The image processing apparatus according to any one of the configurations 1 to 8 further includes a selection unit configured to select a pair that is highly likely to be a combination of a person and a reflected image of the person in the plurality of objects detected by the person detection unit, and a similarity calculation unit configured to calculate similarity between objects corresponding to the pair selected by the selection unit.

### (Configuration 10)

In the image processing apparatus according to the configuration 9, the selection unit selects the pair based on a positional relationship between the plurality of objects.

### (Configuration 11)

The image processing apparatus according to any one of the configurations 1 to 10 further includes a joint point detection unit configured to detect a joint point of a person from an image of each area of the plurality of objects, and a similarity calculation unit configured to calculate similarity between the plurality of objects based on a detection result by the joint point detection unit.

### (Configuration 12)

In the image processing apparatus according to the configuration 11, the fall determination unit determines fall states of the plurality of persons corresponding to the plurality of objects based on the detection result by the joint point detection unit.

### (Configuration 13)

In The image processing apparatus according to the configuration 11 or 12, the joint point detection unit detects a joint point using a third learning model and acquires a feature map of the object from the third learning model, and the image processing apparatus further includes a similarity calculation unit configured to calculate similarity between the plurality of objects using the feature map acquired by the joint point detection unit.

### (Configuration 14)

In the image processing apparatus according to the configuration 13, the joint point detection unit acquires a joint point likelihood map of the object from the third learning model, and the similarity calculation unit inverts a joint point likelihood map of one object in two objects in a vertical direction to calculate a difference from a joint point likelihood map of another object and calculates similarity between the two objects based on the difference calculated.

### (Configuration 15)

In the image processing apparatus according to the configuration 13 or 14, the joint point detection unit calculates joint point coordinates from a joint point likelihood map acquired from the third learning model, and the similarity calculation unit inverts a joint point position of one object in two objects in the vertical direction to calculate a difference from a joint point position of another object and calculates similarity between the two objects based on the difference calculated.

### (Configuration 16)

The image processing apparatus according to any one of the configurations 11 to 15 further includes a human body ratio calculation unit configured to calculate a human body ratio representing a ratio of a size of each region in a human body based on the detection result by the joint point detection unit, and the similarity calculation unit calculates the similarity based on the human body ratio.

### (Configuration 17)

The image processing apparatus according to any one of the configurations 1 to 16 further includes a generation unit configured to estimate three-dimensional models of the plurality of persons corresponding to the plurality of objects from an image of each area of the plurality of objects and generate a prediction image that reproduces a reflected image of the person reflected on another object based on the estimated three-dimensional model, and a similarity calculation unit configured to calculate similarity between the plurality of objects based on the image of each area of the plurality of objects and the prediction image corresponding to each of the plurality of objects.

### (Method)

A method for processing an image includes detecting an object representing a person from an image, and determining, based on similarity between a plurality of objects detected by the detecting and an image in each area of the plurality of objects, a fall state of a plurality of persons corresponding to the plurality of objects.

### (Program)

A program causes a computer of an image processing apparatus to function as a person detection unit configured to detect an object representing a person from an image, and a fall determination unit configured to determine, based on similarity between a plurality of objects detected by the person detection unit and an image in each area of the plurality of objects, a fall state of a plurality of persons corresponding to the plurality of objects.

According to the present invention, in a case where a fall state of a person in an image is to be detected, it is possible to suppress erroneous detection of a reflected image of the person reflected on a floor surface or the like while suppressing an increase in a calculation amount.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

While the present invention has been described with reference to embodiments, it is to be understood that the invention is not limited to the disclosed embodiments but is defined by the scope of the following claims.

## Claims

1. An image processing apparatus comprising:
person detection means (202) configured to carry out person detection on an image and acquire a plurality of detection results;
similarity calculation means (205) configured to calculate similarity between a plurality of the detection results;
fall determination means (204) configured to determine a fall state for at least one of the detection results; and
removal means (206) configured to remove a detection result likely to represent a reflection of a person based on at least the calculated similarity.

2. The image processing apparatus according to claim 1, wherein the removal means (206) is configured to remove a detection result likely to represent a reflection of a person based on a position of the detection result in the image relative to another detection result.

3. The image processing apparatus according to claim 1 or 2, wherein the removal means (206) is configured to, in a case where there is a second detection result of which similarity to a first detection result is greater than or equal to a threshold value, remove one of the first detection result or the second detection result based on a positional relationship between the first detection result and the second detection result.

4. The image processing apparatus according to claim 1, 2 or 3, wherein the removal means (206) is configured to, in a case where there is a second detection result of which similarity to a first detection result is greater than or equal to a threshold value, remove one of the first detection result or the second detection result based on a fall state of the first detection result and the second detection result.

5. The image processing apparatus according to any one of claims 1 to 4,
wherein the person detection means (202) is configured to carry out person detection using a first learning model and is configured to acquire a feature map from the first learning model, and
wherein the similarity calculation means (205) calculates similarity between the plurality of detection results using the feature maps acquired by the person detection means.

6. The image processing apparatus according to claim 2 or 3, wherein, the fall determination means does not determine a fall state of one of the first detection result or the second detection result.

7. The image processing apparatus according to any one of claims 1 to 5, further comprising:
an image clipping means (203) configured to clip an area of the image corresponding to each detection result and input each clipped area to the fall determination means (204); and
wherein the fall determination means uses a second learning model to determine a fall state of a person to acquire a feature map corresponding to each of the clipped areas;
wherein the similarity calculation means (205) is configured to calculate similarity between the detection results using the feature maps acquired by the second learning model.

8. The image processing apparatus according to any one of claims 1 to 5 or 7, further comprising:
selection means (1101) configured to select a pair of detection results that is likely to be a combination of a person and a reflected image of the person;
wherein the similarity calculation means (205) is configured to calculating similarity between detection results corresponding to the pair selected by the selection means.

9. The image processing apparatus according to any one of claims 1 to 5, 7 or 8, further comprising:
joint point detection means (1501) configured to detecting a joint point of a person from an area of the image corresponding to each of the plurality of detection results; and
similarity calculation means for calculating similarity between the plurality of detection results based on a joint detection result by the joint point detection means.

10. The image processing apparatus according to claim 9, wherein the fall determination means (204) is configured to determine fall states corresponding to the plurality of detection results based on the joint detection results by the joint point detection means.

11. The image processing apparatus according to claim 9 or 10,
wherein the joint point detection means (1501) is configured to detect a joint point using a third learning model and acquire a feature map from the third learning model, and
wherein the similarity calculation means calculates similarity between the plurality of detection results using the feature map acquired by the joint point detection means.

12. The image processing apparatus according to claim 11,
wherein the joint point detection means acquires a joint point likelihood map from the third learning model, and
wherein the similarity calculation means is configured to invert a joint point likelihood map corresponding to one detection result in a vertical direction to calculate a difference from a joint point likelihood map of another detection result and calculate similarity between the two detection results based on the difference calculated.

13. The image processing apparatus according to claim 11 or 12,
wherein the joint point detection means is configured to calculate joint point coordinates from a joint point likelihood map acquired from the third learning model, and
wherein the similarity calculation means is configured to invert a joint point position corresponding to one detection result in a vertical direction to calculate a difference from a joint point position of another detection result and calculate similarity between the two objects based on the difference calculated.

14. The image processing apparatus according to any one of claims 9 to 13, further comprising a human body ratio calculation means (1901) configured to calculate a human body ratio representing a ratio of a size of each region in a human body based on the joint detection result by the joint point detection means,
wherein the similarity calculation means (205) is configured to calculate the similarity based on the human body ratio.

15. The image processing apparatus according to any one of claims 1 to 14, further comprising:
generation means (2101) configured to estimate three-dimensional models from areas of the image corresponding to the detection results and generate a prediction image that reproduces a reflected image of the person based on the estimated three-dimensional model;
wherein the similarity calculation means is configured to calculate similarity between the plurality of detection results based on the area of the image corresponding to each of the plurality of detection results and the prediction image corresponding to each of the plurality of detection results.
